(19) Europäisches Patentamt
European Patent Office
Office européen des brevets

(11) Veröffentlichungsnummer: **0 098 800**
**B1**

(12) # EUROPÄISCHE PATENTSCHRIFT

(45) Veröffentlichungstag der Patentschrift: **14.08.85**

(51) Int. Cl.[4]: **C 07 C 145/04,** C 07 C 149/437, A 01 N 47/24

(21) Anmeldenummer: **83810287.9**

(22) Anmeldetag: **27.06.83**

(54) **Carbaminsäureester.**

(30) Priorität: **02.07.82 CH 4054/82**
**16.03.83 CH 1437/83**

(43) Veröffentlichungstag der Anmeldung: **18.01.84 Patentblatt 84/3**

(45) Bekanntmachung des Hinweises auf die Patenterteilung: **14.08.85 Patentblatt 85/33**

(84) Benannte Vertragsstaaten: **BE CH DE FR GB IT LI NL**

(56) Entgegenhaltungen: **GB - A - 1 573 620**

(73) Patentinhaber: **CIBA-GEIGY AG, Postfach, CH-4002 Basel (CH)**

(72) Erfinder: **Böger, Manfred, Wilhelm Glock-Strasse 14, D-7858 Weil am Rhein 5 (DE)**
Erfinder: **Drabek, Jozef, Dr., Benkenstrasse 12, CH-4104 Oberwil (CH)**

**EP 0 098 800 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft neue substituierte N-Alkyl-N-sulfenyl-carbaminsäure-[2-(4-phenoxyphenoxy)- und 2-(4-Phenylthiophenoxy)-äthyl]-ester. Verfahren zu ihrer Herstellung und ihre Verwendung in der Schädlingsbekämpfung.

Die erfindungsgemässen Carbaminsäureester haben die Formel I

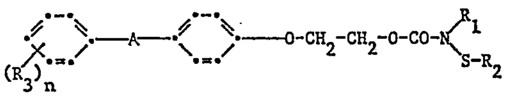 (I)

worin

$R_1$ $C_1$-$C_4$-Alkyl;

$R_2$ Phenyl, durch 1 oder 2 Halogenatome oder 1 oder 2 $C_1$-$C_4$-Alkylreste substituiertes Phenyl oder $-C(CH_3)_2-C{\equiv}N$;

$R_3$ Halogen, $C_1$-$C_4$-Alkyl oder mit bis zu drei Halogenatomen substituiertes $C_1$-$C_4$-Alkyl;

A Sauerstoff oder Schwefel; und

n eine Zahl 0, 1 oder 2 bedeuten.

Bevorzugt sind erfindungsgemäss Verbindungen der Formel I, worin

$R_2$ Phenyl, durch 1 oder 2 Fluor-, Chlor- oder Bromatome oder 1 oder 2 Methylgruppen substituiertes Phenyl oder $-C(CH_3)_2-C{\equiv}N$; und

$R_3$ Fluor, Chlor, Brom, Methyl oder Trifluormethyl bedeuten. Insbesondere sind Verbindungen der Formel I hervorzuheben, worin $R_2$ Phenyl, durch 1 oder 2 Chloratome oder Methylgruppen substituiertes Phenyl oder $-C(CH_3)_2-C{\equiv}N$ und $R_3$ Chlor oder Trifluormethyl bedeuten.

Weiterhin bevorzugt werden Verbindungen der Formel I, worin sich $R_3$ in 2- und/oder 4-Stellung am Phenyl befindet oder $R_2$ Phenyl, 4-Chlorphenyl, $-C(CH_3)_2-C{\equiv}N$ oder 2,4-Dimethylphenyl bedeutet.

Wegen ihrer Wirksamkeit von besonderem Interesse sind ferner solche Verbindungen der Formel I, worin $R_3$ 2−Cl, 4−Cl oder 4−$CF_3$ bedeutet, solche, worin $R_1$ Methyl oder Äthyl bedeutet, und solche, worin n für 0 steht.

Die Verbindungen der Formel I können analog an sich bekannten Verfahren (vgl. z.B. europäische Patentanmeldung Nr. 0004334 und britische Patentschrift Nr. 1573620) hergestellt werden.

So kann man z.B. eine Verbindung der Formel I erhalten, indem man

a) eine Verbindung der Formel II

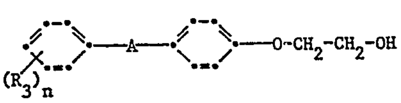 (II)

mit einer Verbindung der Formel III

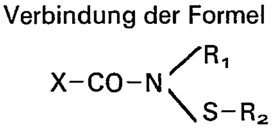 (III)

oder

b) eine Verbindung der Formel IV

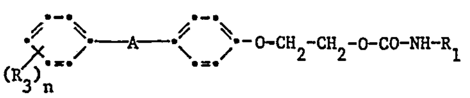 (IV)

mit einer Verbindung der Formel V

$$X-S-R_2 \quad (V)$$

umsetzt, wobei in den Formeln II bis V die Reste $R_1$, $R_2$, $R_3$ und A sowie n die vorstehend unter Formel I angegebenen Bedeutungen haben und X Halogen, vorzugsweise Chlor, bedeutet.

Die erwähnten Verfahren a) und b) können vorzugsweise unter normalem Druck und in Gegenwart eines organischen Lösungs- oder Verdünnungsmittels durchgeführt werden. Als Lösungs- oder Verdünnungsmittel eignen sich z.B. Äther und ätherartige Verbindungen, wie Dipropyläther, Dibutyläther, Dioxan, Dimethoxyäthan und Tetrahydrofuran; N,N-dialkylierte Carbonsäureamide; aliphatische, aromatische sowie halogenierte Kohlenwasserstoffe, insbesondere Benzol, Toluol, Xylol, Chloroform, Methylenchlorid, Tetrachlorkohlenstoff und Chlorbenzol; Ketone, z.B. Aceton, Methyläthylketon, Methylisopropylketon und Methylisobutylketon. Das Verfahren a) wird im allgemeinen bei einer Temperatur von −10 bis 200°C, vorzugsweise zwischen 20 und 150°C, insbesondere beim Siedepunkt des verwendeten inerten Lösungsmittels, und vorzugsweise in Gegenwart eines Säureacceptors durchgeführt. Die Durchführung von Verfahren b) erfolgt bei einer Temperatur von −20 bis 100°C, insbesondere zwischen 0 und 50°C und vorzugsweise ebenfalls in Gegenwart eines Säureacceptors. Als Säureacceptoren bei den genannten Verfahren können in üblicher Weise Basen und basische Substanzen verwendet werden. Bevorzugte Basen sind tertiäre Amine, wie Trialkylamine, z.B. Triäthylamin, Pyridin, Lutidine usw., die im stöchiometrischen Überschuss eingesetzt gleichzeitig als Lösungsmittel dienen können.

Die Ausgangsstoffe der Formeln II bis V sind bekannt und können analog bekannten Verfahren hergestellt werden.

Aus der deutschen Offenlegungsschrift Nr. 2132936 sind N-Carboxy-carbaminsäurephenylester mit insektiziden und akariziden Eigenschaften bekannt. Ferner werden in der europäischen Patentanmeldung Nr. 0004334 substituierte N-(4-Phenoxyphenoxyäthyl)- und N-(4-Phenylthiophenoxyäthyl)-carbaminsäurealkylester als Entwicklungshemmer mit pestizider Wirksamkeit beschrieben. Weiterhin sind insektizid und akarizid wirksame substituierte N-Alkyl-carbaminsäure-(4-phenoxyphenoxyäthyl)-ester Gegenstand der britischen Patentschrift Nr. 1573620. Bei den erfindungsgemässen Verbindungen handelt es sich demgegenüber um neuartige substituierte N-Alkyl-N-sulfenyl-carbaminsäure-(4-Phenoxyphenoxyäthyl- und 4-Phenylthiophenoxyäthyl)-ester, die überraschenderweise erhöhte Wirksamkeit als Schädlingsbekämpfungsmittel aufweisen. Ein besonderer Vorteil der erfindungsgemässen Verbindungen der Formel I ergibt sich aus ihrer sehr geringen Warmblütertoxizität und ihrer guten Pflanzenverträglichkeit.

Insbesondere eignen sich die Verbindungen der Formel I zur Bekämpfung von Insekten der Ordnungen: Lepidoptera, Coleoptera, Homoptera,

Heteroptera, Diptera, Thysanoptera, Orthoptera, Anoplura, Siphonaptera, Mallophaga, Thysanura, Isoptera, Psocoptera und Hymenoptera. Die Verbindungen der Formel I besitzen ferner akarizide Wirkung.

Neben ihrer Wirkung gegenüber Fliegen, wie z.B. Musca domestica, und Mückenlarven können Verbindungen der Formel I auch zur Bekämpfung von pflanzenschädigenden Frassinsekten in Zier- und Nutzpflanzungen sowie in Obst- und Gemüsekulturen (z.B Laspeyresia pomonella, Leptinotarsa decemlineata, Adoxophyes reticulana und Epilachna varivestis) eingesetzt werden. Die Verbindungen der Formel I zeichnen sich vor allem durch eine ausgeprägte ovizide Wirkung, insbesondere gegen Eier von fressenden Schadinsekten, aus. Werden Verbindungen der Formel I von adulten Insekten-Stadien mit dem Futter aufgenommen, so ist in vielen Fällen, insbesondere bei Coleopteren, wie z.B. Anthonomus grandis, eine verminderte Ei-Ablage und/oder reduzierte Schlupfrate festzustellen.

Die Verbindungen der Formel I können auch zur Bekämpfung von Ektoparasiten, wie Lucilia sericata und ektoparasitären Akarinen, an Haus- und Nutztieren eingesetzt werden, z.B. durch Tier-, Stall- und Weidebehandlung. Die erfindungsgemässen Verbindungen eignen sich insbesondere zur Bekämpfung von tierparasitären Zecken, wie Rhipicephalus bursa, Amblyomma hebraeum und Boophilus microplus.

Die Wirkung der erfindungsgemässen Verbindungen bzw. der sie enthaltenden Mittel lässt sich durch Zusatz von anderen Pestiziden wesentlich verbreitern und an gegebene Umstände anpassen. Als Zusätze kommen z.B. folgende Wirkstoffe in Betracht: organische Phosphorverbindungen, Nitrophenole und Derivate, Formamidine, Harnstoffe, Carbamate, chlorierte Kohlenwasserstoffe, Pyrethroide und Bacillus thuringiensis-Präparate.

Mit besonderem Vorteil kann man die Verbindungen der Formel I auch mit Substanzen kombinieren, welche einen pestizid verstärkenden Effekt ausüben. Beispiele solcher Verbindungen sind u.a.: Piperonylbutoxid, Propinyläther, Propinyloxime, Propinylcarbamate und Propinylphosphonate, 2-(3,4-Methylendioxyphenoxy)-3,6,9-trioxaundecan oder S,S,S-Tributylphosphorotrithioate.

Die gute insektizide und akarizide Wirkung der erfindungsgemässen Verbindungen der Formel I entspricht einer Abtötungsrate (Mortalität) von mindestens 50-60% der erwähnten Schädlinge.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren, wie Versprühen, Vernebeln, Verstäuben, Verstreuen oder Giessen, werden ebenso wie die Mittel den angestrebten Zielen und den gegebenen Verhältnissen entsprechend gewählt.

Die Formulierungen, d.h. die den Wirkstoff der Formel, bzw. Kombinationen dieser Wirkstoffe mit andern Insektiziden oder Akariziden, und gegebenenfalls einen festen oder flüssigen Zusatzstoff enthaltenden Mittel, Zubereitungen oder Zusammensetzungen, werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester, wie Dibutyl- oder Dioctylphthalat, aliphatische Kohlenwasserstoffe, wie Cyclohexan, Paraffine, Alkohole und Glykole sowie deren Äther und Ester, wie Äthanol, Äthylenglykol, Äthylenglykolmonoethyl- oder -äthyläther, Ketone, wie Cyclohexanon, stark polare Lösungsmittel, wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl, oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäuren oder hochdisperse saugfähige Polymerisate zugesetzt werden.

Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüber hinaus kann eine Vielzahl von vorgranulierten Materialien anorganischer oder organischer Natur, wie insbesondere Dolomit oder zerkleinerte Pflanzenrückstände, verwendet werden.

Als oberflächenaktive Verbindungen kommen je nach der Art des zu formulierenden Wirkstoffes der Formel I oder der Kombinationen dieser Wirkstoffe mit andern Insektiziden oder Akariziden nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen als auch wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Öl- oder Stearinsäure, oder von natürlichen Fettsäuregemischen, die z.B. aus Kokosnuss- oder Tallöl gewonnen werden können. Ferner sind als Tenside auch die Fettsäure-Methyltaurinsalze sowie modifizierte und nichtmodifizierte Phospholipide zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali, Erdalkali- oder gegebenenfalls substituierte Ammoniumsalze vor und weisen im allgemeinen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2 Sulfonsäuregruppen und einen Fettsäurerest mit etwa 8-22 C-Atomen. Alkylarylsulfonate sind z.B. die Na-, Ca- oder Triäthanolaminsalze der Dodecylbenzolsulfonsäure, der Dibutylnaphtalinsulfonsäure oder eines Naphthalinsulfonsäure-Formaldehydkondensationsproduktes. Ferner kommen auch entsprechende Phosphate, wie z.B. Salze des Phosphorsäureesters eines p-Nonylphenol-(4-14)-Äthylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können. Weiterhin geeignete nichtionische Tenside sind die wasserlöslichen 20 bis 250 Äthylenglykoläthergruppen und 10 bis 100 Propylenglykoläthergruppen enthaltenden Polyäthylenoxid-Addukte an Polypropylenglykol, Äthylendiaminopopypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglykoläther, Polypropylen-Polyäthylenoxy-Addukte, Tributylphenoxypolyäthoxyäthanol, Polyäthylenglykol und Octylphenoxypolyäthoxyäthanol erwähnt. Ferner kommen auch Fettsäureester von Polyoxyäthylensorbitan, wie das Polyoxyäthylensorbitan-trioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z.B. das Stearyltrimethylammoniumchlorid oder das Benzyl-di-(2-chloräthyl)-äthylammoniumbromid.

Die in der Formulierungstechnik gebräuchlichen Tenside sind u.a. in folgenden Publikationen beschrieben:

«McCuthceon's Detergents and Emulsifiers Annual» MC Publishing Corp., Ridgewood, New Jersey, 1981; H. Stache, «Tensid-Taschenbuch», Carl Hanser Verlag, München/Wien, 1981.

Die pestiziden Zubereitungen enthalten in der Regel 0,1 bis 99%, insbesondere 0,1 bis 95%, Wirkstoff der Formel I oder Kombinationen dieser Wirkstoffe mit andern Insektiziden oder Akariziden, 1 bis 99,9% eines festen oder flüssigen Zusatzstoffes und 0 bis 25%, insbesondere 0,1 bis 20%, eines Tensides. Während als Handelsware eher konzentrierte Mittel bevorzugt werden, verwendet der Endverbraucher in der Regel verdünnte Zubereitungen, die wesentlich geringere Wirkstoffkonzentrationen aufweisen.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

*Formulierungsbeispiele für flüssige Wirkstoffe der Formel I oder Kombinationen dieser Wirkstoffe mit andern Insektiziden oder Akariziden (% = Gewichtsprozent)*

| 1. *Emulsions-Konzentrate* | a) | b) | c) |
|---|---|---|---|
| Wirkstoff resp. Wirkstoffkombination | 25% | 40% | 50% |
| Ca-Dodecylbenzolsulfonat | 5% | 8% | 6% |
| Ricinusölpolyäthylenglykoläther (36 Mol AeO) | 5% | — | — |
| Tributylphenolpolyäthylenglykoläther (30 Mol AeO) | — | 12% | 4% |
| Cyclohexanon | — | 15% | 20% |
| Xylolgemisch | 65% | 25% | 20% |

Aus solchen Konzentraten können durch Verdünnen mit Wasser Emulsionen jeder gewünschten Konzentration hergestellt werden.

| 2. *Lösungen* | a) | b) | c) | d) |
|---|---|---|---|---|
| Wirkstoff resp. Wirkstoffkombination | 80% | 10% | 5% | 95% |
| Äthylenglykolmonoethyläther | 20% | — | — | — |
| Polyäthylenglykol (MG 400) | — | 70% | — | — |
| N-Methyl-2-pyrrolidon | — | 20% | — | — |
| Epoxydiertes Kokosnussöl | — | — | 1% | 5% |
| Benzin (Siedegrenzen 160-190° C) | — | — | 94% | — |

Die Lösungen sind zur Anwendung in Form kleinster Tropfen geeignet.

| 3. *Granulate* | a) | b) |
|---|---|---|
| Wirkstoff resp. Wirkstoffkombination | 5% | 10% |
| Kaolin | 94% | — |
| Hochdisperse Kieselsäure | 1% | — |
| Attapulgit | — | 90% |

Der Wirkstoff oder die Wirkstoffkombination wird in Methylenchlorid gelöst, auf den Träger aufgesprüht und das Lösungsmittel anschliessend im Vakuum abgedampft.

| 4. *Stäubemittel* | a) | b) |
| --- | --- | --- |
| Wirkstoff resp. Wirkstoffkombination | 2% | 5% |
| Hochdisperse Kieselsäure | 1% | 5% |
| Talkum | 97% | — |
| Kaolin | — | 90% |

Durch inniges Vermischen der Trägerstoffe mit dem Wirkstoff oder der Wirkstoffkombination erhält man gebrauchsfertige Stäubemittel.

*Formulierungsbeispiele für feste Wirkstoffe der Formel I resp. Kombinationen dieser Wirkstoffe mit andern Insektiziden oder Akariziden (% = Gewichtsprozent)*

| 5. *Spritzpulver* | a) | b) | c) |
| --- | --- | --- | --- |
| Wirkstoff oder Wirkstoffkombination | 25% | 50% | 75% |
| Na-Ligninsulfonat | 5% | 5% | — |
| Na-Laurylsulfat | 3% | — | 5% |
| Na-Diisobutylnaphthalinsulfonat | — | 6% | 10% |
| Octylphenolpolyäthylenglykoläther (7-8 Mol AeO) | — | 2% | — |
| Hochdisperse Kieselsäure | 5% | 10% | 10% |
| Kaolin | 62% | 27% | — |

Der Wirkstoff oder die Wirkstoffkombination wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

*6. Emulsions-Konzentrat*

| | |
| --- | --- |
| Wirkstoff oder Wirkstoffkombination | 10% |
| Octylphenolpolyäthylenglykoläther (4-5 Mol AeO) | 3% |
| Ca-Dodecylbenzolsulfonat | 3% |
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

| 7. *Stäubemittel* | a) | b) |
| --- | --- | --- |
| Wirkstoff oder Wirkstoffkombination | 5% | 8% |
| Talkum | 95% | — |
| Kaolin | — | 92% |

Man erhält anwendungsfertige Stäubemittel, indem der Wirkstoff oder die Wirkstoffkombination mit dem Träger vermischt und auf einer geeigneten Mühle vermahlen wird.

*8. Extruder-Granulat*

| | |
| --- | --- |
| Wirkstoff oder Wirkstoffkombination | 10% |
| Na-Ligninsulfonat | 2% |
| Carboxymethylcellulose | 1% |
| Kaolin | 87% |

Der Wirkstoff oder die Wirkstoffkombination wird mit den Zusatzstoffen vermischt, vermahlen und mit Wasser angefeuchtet. Dieses Gemisch wird extrudiert, granuliert und anschliessend im Luftstrom getrocknet.

*9. Umhüllungs-Granulat*

| | |
| --- | --- |
| Wirkstoff oder Wirkstoffkombination | 3% |
| Polyäthylenglykol (MG 200) | 3% |
| Kaolin | 94% |

Der fein gemahlene Wirkstoff oder die Wirkstoffkombination wird in einem Mischer auf das mit Polyäthylenglykol angefeuchtete Kaolin gleichmässig aufgetragen. Auf diese Weise erhält man staubfreie Umhüllungs-Granulate.

*10. Suspensions-Konzentrat*

| | |
| --- | --- |
| Wirkstoff oder Wirkstoffkombination | 40% |
| Äthylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wässerige Formaldehyd-Lösung | 0,2% |
| Silikonöl in Form einer 75%igen wässerigen Emulsion | 0,8% |
| Wasser | 32% |

Der fein gemahlene Wirkstoff oder die Wirkstoffkombination wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

*Beispiel 1:*

*Herstellung von N-Methyl-N-(2-isobutyronitril)-sulfenyl-carbaminsäure-[2-(4-phenoxy)-phenoxyäthyl]-ester*

9,2 g 2-(4-Phenoxy)-phenoxy-äthanol werden in 100 ml Toluol (wasserfrei), 5 g Triäthylamin und 0,4 g 4-Dimethylaminopyridin bei Raumtemperatur verrührt, und dann werden langsam 7,05 g (2-Fluorcarbonyl-4-cyano-4-methyl)-2-aza-3-sulfapentan gelöst in 20 ml wasserfreiem Toluol zugetropft. Das Gemisch wird 10 Stunden bei 100°C gerührt, die erhaltene Reaktionsmischung nach dem Abkühlen mit Wasser versetzt, die Toluolphase mehrmals mit Wasser gewaschen, über Natriumsulfat getrocknet und eingedampft. Das erhaltene gelbe Öl wird über Kieselgel mit Dichlormethan chromatographiert. Nach dem Eindampfen erhält man die Titelverbindung der Formel

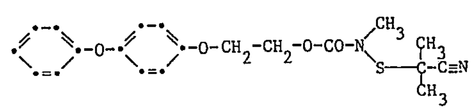

als helles Öl mit dem Brechungsindex $n_D^{20}=1,5583$ (Verbindung Nr. 1).

*Beispiel 2:*

*Herstellung von N-Äthyl-N-(4-chlorphenyl)-sulfenyl-carbaminsäure-[2-(4-phenoxy)-phenoxyäthyl]-ester*

9 g N-Äthyl-carbaminsäure-[2-(4-phenoxy)-phenoxyäthyl]-ester werden in 30 ml Pyridin vorgelegt, und unter Rühren und Kühlung werden 5,4 g 4-Chlorphenylsulfenylchlorid bei 5 bis 10°C langsam zugetropft. Das Reaktionsgemisch wird

3 Stunden bei 10° C gerührt, danach 3 Stunden bei Raumtemperatur nachgerührt und dann auf eine Mischung aus 300 ml Eiswasser und 100 ml Toluol gegossen. Die organische Phase wird mit Wasser gewaschen, über Natriumsulfat getrocknet und eingedampft. Das erhaltene rötliche Öl wird über Kieselgel mit einer Dichlormethan-Hexan-Mischung (Volumenverhältnis 1:1) und zuletzt mit reinem Dichlormethan chromatographiert. Nach dem Eindampfen erhält man die Titelverbindung der Formel

als farbloses Öl mit dem Brechungsindex $n_D^{20}=1,5949$ (Verbindung Nr. 2).

Analog den vorstehend beschriebenen Arbeitsweisen wurden die folgenden Verbindungen der Formel I hergestellt:

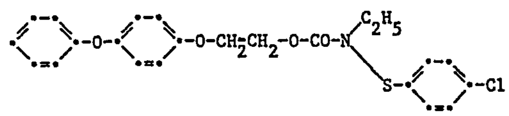

| Verbindung Nr. | $R_3$ | n | A | $R_1$ | $R_2$ | Physikalische Daten |
|---|---|---|---|---|---|---|
| 3 | – | 0 | –O– | $-C_2H_5$ | $-C(CH_3)_2CN$ | $n_D^{20}= 1,5520$ |
| 4 | – | 0 | –O– | $-C_2H_5$ | 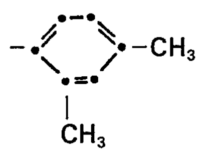 | $n_D^{20}= 1,5864$ |
| 5 | 4–$CF_3$ | 1 | –O– | $-C_2H_5$ | 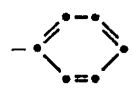 | $n_D^{20}= 1,5609$ |
| 6 | 2–Cl, 4–Cl | 2 | –O– | $-C_2H_5$ | 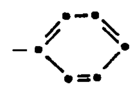 | $n_D^{20}= 1,6038$ |
| 7 | 2–Cl, 4–$CF_3$ | 2 | –O– | $-C_2H_5$ | 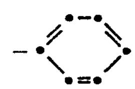 | $n_D^{20}= 1,5721$ |
| 8 | – | 0 | –O– | n–$C_3H_7$ | 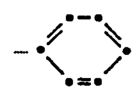 | $n_D^{20}= 1,5900$ |
| 9 | – | 0 | –O– | n–$C_4H_9$ | 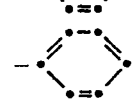 | $n_D^{20}= 1,5850$ |
| 10 | – | 0 | –O– | n–$C_4H_9$ | 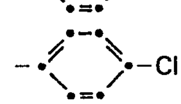 | $n_D^{20}= 1,5860$ |
| 11 | – | 0 | –S– | $-C_2H_5$ | 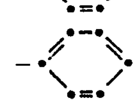 | $n_D^{25}= 1,6180$ |
| 12 | – | 0 | –S– | $-C_2H_5$ | 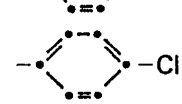 | $n_D^{25}= 1,6192$ |
| 13 | – | 0 | –S– | $-C_2H_5$ | $-C(CH_3)_2CN$ | $n_D^{25}= 1,5769$ |
| 14 | – | 0 | –O– | n–$C_3H_7$ | $-C(CH_3)_2CN$ | $n_D^{22}= 1,5469$ |
| 15 | – | 0 | –O– | n–$C_4H_9$ | $-C(CH_3)_2CN$ | $n_D^{22}= 1,5412$ |
| 16 | 4–Cl | 1 | –O– | $-CH_3$ | $-C(CH_3)_2CN$ | $n_D^{20}= 1,5626$ |
| 17 | 4–Cl | 1 | –S– | $-C_2H_5$ | $-C(CH_3)_2CN$ | $n_D^{20}= 1,5819$ |

In entsprechender Weise sind die folgenden Verbindungen der Formel I erhältlich:

| Verbindung Nr. | $R_3$ | n | A | $R_1$ | $R_2$ |
|---|---|---|---|---|---|
| 18 | 4-F | 1 | -O- | $-C_2H_5$ | 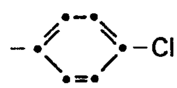 |
| 19 | - | 0 | -O- | $-C_2H_5$ | 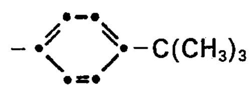 |
| 20 | $4-CH_3$ | 1 | -O- | $-C_2H_5$ | $-C(CH_3)_2CN$ |
| 21 | - | 0 | -O- | $-CH_3$ | 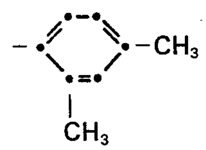 |
| 22 | - | 0 | -O- | $-C_2H_5$ | 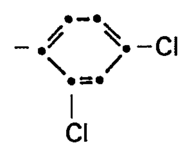 |
| 23 | - | 0 | -O- | $-CH_3$ | 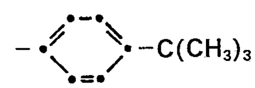 |
| 24 | $4-C(CH_3)_3$ | 1 | -O- | $-C_2H_5$ | $-C(CH_3)_2CN$ |

*Beispiel 3:*

*Wirkung gegen Musca domestica:*

Je 50 g frisch zubereitetes CSMA-Nährsubstrat für Maden werden in Becher eingewogen. Von einer 1 Gew.-%igen acetonischen Lösung des betreffenden Wirkstoffes wird eine bestimmte Menge auf das in den Bechern befindliche Nährsubstrat pipettiert, so dass sich Wirkstoff-Konzentrationen von 0,1-0,01% ergeben. Nach dem Durchmischen des Substrates lässt man das Aceton mindestens 20 Stunden lang verdampfen.

Dann werden pro Wirkstoff und Konzentration je 25 eintägige Maden von Musca domestica in die das so behandelte Nährsubstrat enthaltenden Becher gegeben. Nachdem sich die Maden verpuppt haben, werden die gebildeten Puppen durch Ausschwemmen mit Wasser von dem Substrat abgetrennt und in mit Siebdeckeln verschlossenen Gefässen deponiert.

Die pro Ansatz ausgeschwemmten Puppen werden gezählt (toxischer Einfluss des Wirkstoffes auf die Madenentwicklung). Dann wird nach 10 Tagen die Anzahl der aus den Puppen geschlüpften Fliegen bestimmt.

Verbindungen der Formel I gemäss den vorstehenden Beispielen 1 und 2 zeigen gute Wirkung im obigen Test.

*Beispiel 4:*

*Wirkung gegen Lucilia sericata:*

Zu 9 ml eines Zuchtmediums werden bei 50°C 1 ml einer 0,5% Aktivsubstanz enthaltenden wässerigen Zubereitung gegeben. Nun werden ca. 30 frisch geschlüpfte Lucilia sericata-Larven zum Zuchtmedium gegeben, und nach 48 und 96 Stunden wird die insektizide Wirkung durch Ermittlung der Abtötungsrate festgestellt.

Verbindungen der Formel I gemäss den vorstehenden Beispielen 1 und 2 zeigen in diesem Test gute Wirkung gegen Lucilia sericata.

*Beispiel 5:*

*Wirkung gegen Aedes aegypti:*

Auf die Oberfläche von 150 ml Wasser, das sich in einem Behälter befindet, wird so viel einer 0,1%igen acetonischen Lösung des Wirkstoffes pipettiert, dass Konzentrationen von je 800 und 400 ppm erhalten werden. Nach Verdunsten des Acetons wird der Behälter mit 30 bis 40 2-tätigen Aedes-Larven beschickt. Nach 1, 2 und 5 Tagen wird die Mortalität geprüft.

Verbindungen der Formel I gemäss den vorstehenden Beispielen 1 und 2 zeigen in diesem Test gute Wirkung gegen Aedes aegypti.

*Beispiel 6:*

*Insektizide Frassgift-Wirkung:*

Ca. 25 cm hohe eingetopfte Baumwollpflanzen werden mit wässerigen Wirkstoffemulsionen besprüht, die den Wirkstoff in Konzentrationen von 400 bzw. 800 ppm enthalten.

Nach dem Antrocknen des Sprühbelages werden die Baumwollpflanzen mit Spodoptera littoralis- bzw. Heliothis virescens-Larven im dritten larvalen Stadium besiedelt. Der Versuch wird bei 24°C und 60% relativer Luftfeuchtigkeit durchgeführt. Nach 120 h wird die %-Mortalität der Test-Insekten bestimmt.

Verbindungen der Formel I gemäss den vorstehenden Beispielen 1 und 2 zeigen in diesem Test gute Wirkung.

*Beispiel 7:*

*Wirkung gegen Epilachna varivestis:*

Etwa 15-20 cm hohe Phaseolus vulgaris-Pflanzen (Buschbohnen) werden mit wässerigen, den zu prüfenden Wirkstoff in Konzentrationen von 400 bzw. 800 ppm enthaltenden Emulsions-Zubereitungen besprüht. Nach dem Antrocknen des Sprühbelages werden pro Pflanze 5 larven von Epilachna varivestis (Mexikanischer Bohnenkäfer) im 4. larvalen Stadium angesetzt. Über die infestierten Pflanzen wird ein Plastikzylinder gestülpt, der mit einem Kupfer-Gazedeckel abgedeckt ist. Der Versuch wird bei 28°C und 60% relativer Luftfeuchtigkeit durchgeführt.

Nach 2 und 3 Tagen wird die akute Wirkung (% Mortalität) bestimmt. Zur Auswertung hinsichtlich allfälligem Frass-Schaden (Antifeeding-Effekt), Entwicklungs- und Häutungsstörungen werden die Versuchstiere während weiterer 3 Tage beobachtet.

Verbindungen der Formel I gemäss den vorstehenden Beispielen 1 und 2 zeigen gute Wirkung im obigen Test.

*Beispiel 8:*

*Ovizide Wirkung auf Heliothis virescens:*

Entsprechende Mengenanteile einer benetzbaren pulverförmigen Formulierung, enthaltend 25 Gew.-% des zu prüfenden Wirkstoffes, werden mit jeweils so viel Wasser vermischt, dass sich wässerige Emulsionen von ansteigender Wirkstoffkonzentration ergeben.

In diese wirkstoffhaltigen Emulsionen werden eintägige Eigelege von Heliothis auf Cellophan während 3 Minuten eingetaucht und dann auf Rundfiltern abgenutscht. Die so behandelten Gelege werden in Petrischalen ausgelegt und in der Dunkelheit aufbewahrt. Nach 6 bis 8 Tagen wird die Schlupfrate im Vergleich zu unbehandelten Kontrollen festgestellt. Zur Auswertung wird die zur 100%igen Abtötung der Eier erforderliche minimale Wirkstoffkonzentration bestimmt.

Verbindungen der Formel I gemäss den vorstehenden Beispielen 1 und 2 zeigen gute Wirkung in obigem Test.

*Beispiel 9:*

*Wirkung auf Laspeyresia pomonella (Eier):*

Abgelegte Eier von Laspeyresia pomonella, die nicht älter als 24 h sind, werden auf Filterpapier für 1 min in eine acetonisch-wässerige Lösung, enthaltend ansteigende Mengen des zu prüfenden Wirkstoffes, eingetaucht. Nach dem Antrocknen der Lösung werden die Eier in Petrischalen ausgelegt und bei einer Temperatur von 28°C belassen. Nach 6 d wird der prozentuale Schlupf aus den behandelten Eiern bewertet.

Die Verbindung Nr. 1 gemäss Beispiel 1 zeigt 100% Wirkung (Mortalität) in obigem Test bereits bei einer Wirkstoffkonzentration von 0,2 ppm; bei einer Wirkstoffkonzentration von 0,02 ppm zeigen die Verbindungen Nr. 3, 4, 12 und 13 eine Wirkung von 80-100%. Eine 80-100%ige Wirkung zeigen die Verbindungen Nr. 11 und 14 bei 0,75 ppm; die Verbindung Nr. 8 bei 3 ppm; die Verbindung Nr. 2 bei 50 ppm; die Verbindungen Nr. 6 und 15 bei 100 ppm; die Verbindungen Nr. 5 und 9 bei 200 ppm; und die Verbindungen Nr. 7 und 10 bei 400 ppm.

*Beispiel 10:*

*Reproduktions-Beeinflussung von Anthonomus grandis:*

Adulte Anthonomus grandis, die nach dem Schlupf nicht älter als 24 h waren, werden in Gruppen zu jeweils 25 Käfern in Käfige mit Gitterwänden überführt. Die mit den Käfern besetzten Käfige werden sodann während 5 bis 10 s in eine acetonische Lösung, enthaltend 1,0 Gew.-% des zu prüfenden Wirkstoffes, eingetaucht.

Nachdem die Käfer wieder trocken sind, werden sie zur Kopulation und Eiablage in abgedeckte und Futter enthaltende Schalen eingesetzt. Abgelegte Eier werden zwei- bis dreimal wöchentlich mit fliessendem Wasser ausgeschwemmt, gezählt, durch zwei- bis dreistündiges Einlegen in ein wässeriges Desinfektionsmittel desinfiziert und dann in Schalen, die eine geeignete Larvaldiät enthalten, deponiert. Nach 7 d wird Untersucht, ob sich aus den deponierten Eiern Larven entwickelt haben.

Zur Ermittlung der Dauer des die Reproduktion beeinflussenden Effektes der zu prüfenden Wirkstoffe wird die Eiablage der Käfer während eines Zeitraumes von etwa 4 Wochen überprüft. Die Bonitierung erfolgt anhand der Verminderung der Anzahl abgelegter Eier und der daraus geschlüpften Larven im Vergleich zu unbehandelten Kontrollen.

Verbindungen der Formel I gemäss den vorstehenden Beispielen 1 und 2 zeigen eine gute reproduktionsreduzierende Wirkung im obigen Test.

*Beispiel 11:*

*Test auf Wirkung gegen Zecken: Abtötungswirkung in verschiedenen Entwicklungsstadien*

Als Testobjekte werden Larven (jeweils ca. 50), Nymphen (jeweils ca. 25) oder Imagines (jeweils ca. 10) der Zeckenarten Rhipicephalus bursa, Amblyomma hebraeum und Boophilus microplus verwendet. Die Testtiere werden für kurze Zeit in wässerige Emulsionen bzw. Lösungen der zu untersuchenden Substanzen von bestimmter Konzentration getaucht. Die in Teströhrchen befindlichen Emulsionen bzw. Lösungen werden dann mit

Watte aufgenommen und die benetzten Testtiere in den so kontaminierten Röhrchen belassen. Die Auswertung erfolgt für Larven nach 3 d und für Nymphen und Imagines nach 14 d. Es wird die minimale Substanzkonzentration ermittelt, die die 100%ige Abtötung bewirkt, ausgedrückt in ppm Wirksubstanz bezogen auf das Total von Emulsion oder Lösung.

Die Verbindungen der Formel I gemäss Beispiel 1 und 2 sind in folgenden Konzentrationsbereichen wirksam:
Larven: < 0,1-100 ppm
Nymphen: < 1-10 ppm
Adulte: < 10-500 ppm.

## Patentansprüche

1. Verbindung der Formel I

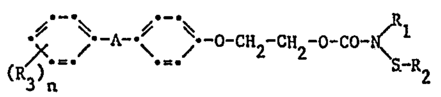
(I)

worin
$R_1$ $C_1$-$C_4$-Alkyl;
$R_2$ Phenyl, durch 1 oder 2 Halogenatome oder 1 oder 2 $C_1$-$C_4$-Alkylreste substituiertes Phenyl oder $-C(CH_3)_2-C{\equiv}N$;
$R_3$ Halogen, $C_1$-$C_4$-Alkyl oder mit bis zu drei Halogenatomen substituiertes $C_1$-$C_4$-Alkyl;
A Sauerstoff oder Schwefel; und
n eine Zahl 0, 1 oder 2 bedeuten.

2. Verbindung der Formel I gemäss Anspruch 1, dadurch gekennzeichnet, dass $R_3$ in 2- und/oder 4-Stellung am Phenyl substituiert ist.

3. Verbindung der Formel I gemäss Anspruch 1 oder 2, dadurch gekennzeichnet, dass $R_2$ Phenyl, durch 1 oder 2 Fluor-, Chlor- oder Bromatome oder 1 oder 2 Methylgruppen substituiertes Phenyl oder $-C(CH_3)_2-C{\equiv}N$; und $R_3$ Fluor, Chlor, Brom, Methyl oder Trifluormethyl bedeuten.

4. Verbindung der Formel I gemäss Anspruch 2, dadurch gekennzeichnet, dass $R_2$ Phenyl, durch 1 oder 2 Chloratome oder Methylgruppen substituiertes Phenyl oder $-C(CH_3)_2-C{\equiv}CN$; und $R_3$ Chlor oder Trifluormethyl bedeuten.

5. Verbindung der Formel I gemäss einem der Ansprüche 1 bis 4, dadurch gekennzeichnet, dass $R_2$ Phenyl, 4-Chlorphenyl, 2,4-Dimethylphenyl oder $-C(CH_3)_2-C{\equiv}N$ bedeutet.

6. Verbindung der Formel I gemäss einem der Ansprüche 1 bis 5, dadurch gekennzeichnet, dass $R_3$ 2−Cl, 4−Cl oder 4−$CF_3$ bedeutet.

7. Verbindung der Formel I gemäss Anspruch 1 bis 6, dadurch gekennzeichnet, dass $R_1$ Methyl oder Äthyl bedeutet.

8. Verbindung der Formel I gemäss einem der Ansprüche 1, 3, 4, 5 oder 7, dadurch gekennzeichnet, dass n für 0 steht.

9. Verbindung gemäss Anspruch 8 der Formel

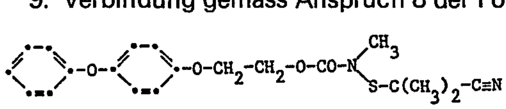

10. Verbindung gemäss Anspruch 8 der Formel

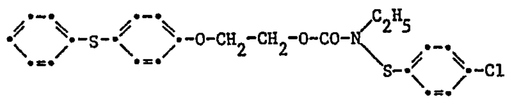

11. Verbindung gemäss Anspruch 8 der Formel

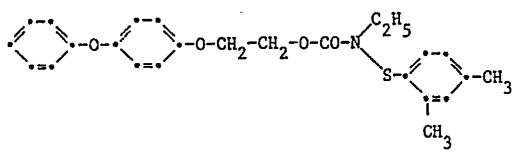

12. Verbindung gemäss Anspruch 8 der Formel

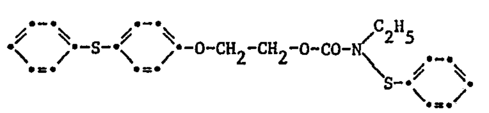

13. Verbindung gemäss Anspruch 8 der Formel

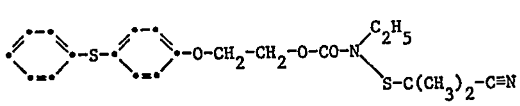

14. Verbindung gemäss Anspruch 8 der Formel

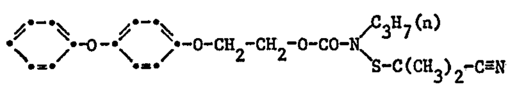

15. Verfahren zur Herstellung einer Verbindung der Formel I gemäss den Ansprüchen 1 bis 14, dadurch gekennzeichnet, dass man

a) eine Verbindung der Formel II

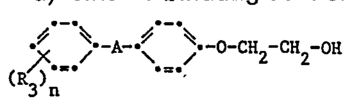
(II)

mit einer Verbindung der Formel III

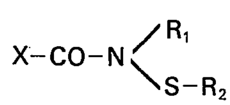
(III)

oder

b) eine Verbindung der Formel IV

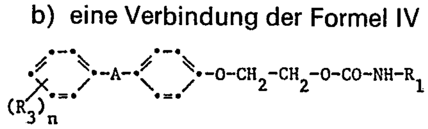
(IV)

mit einer Verbindung der Formel V

$$X-S-R_2 \quad (V)$$

umsetzt, wobei in den Formeln II bis V die Reste $R_1$, $R_2$, $R_3$ und A sowie n die in den Ansprüchen 1 bis 8 angegebenen Bedeutungen haben und X Halogen, vorzugsweise Chlor, bedeutet.

16. Schädlingsbekämpfungsmittel, welches als aktive Komponente eine Verbindung gemäss den Ansprüchen 1 bis 14 zusammen mit geeigneten Trägern und/oder anderen Zuschlagstoffen enthält.

17. Verwendung einer Verbindung gemäss den Ansprüchen 1 bis 14 zur Bekämpfung von Insekten und Vertretern der Ordnung Akarina.

18. Verwendung gemäss Anspruch 17 zur Bekämpfung von pflanzenschädigenden Insekten.

19. Verwendung gemäss Anspruch 18 als Ovizid.

20. Verfahren zur Bekämpfung von Insekten, dadurch gekennzeichnet, dass man als Wirkstoff eine Verbindung der Formel I gemäss Anspruch 1 verwendet.

**Claims**

1. A compound of the formula I

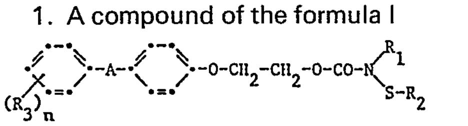 (I)

wherein

$R_1$ is $C_1$-$C_4$ alkyl,

$R_2$ is phenyl, phenyl substituted by 1 or 2 halogen atoms or by 1 or 2 $C_1$-$C_4$ alkyl groups, or is $-C(CH_3)_2-C\equiv N$,

$R_3$ is halogen, $C_1$-$C_4$ alkyl, or $C_1$-$C_4$ alkyl substituted by up to 3 halogen atoms,

A is oxygen or sulfur, and

n is zero, 1 or 2.

2. A compound of the formula I according to claim 1, wherein $R_3$ is substituted in the 2- and/or 4-position on the phenyl ring.

3. A compound of the formula I according to either claim 1 or claim 2, wherein $R_2$ is phenyl, phenyl substituted by 1 or 2 fluorine, chlorine or bromine atoms or by 1 or 2 methyl groups, or is $-C(CH_3)_2-C\equiv N$, and $R_3$ is fluorine, chlorine, bromine, methyl or trifluoromethyl.

4. A compound of the formula I according to claim 2, wherein $R_2$ is phenyl, phenyl substituted by 1 or 2 chlorine atoms or methyl groups, or is $-C(CH_3)_2-C\equiv CN$, and $R_3$ is chlorine or trifluoromethyl.

5. A compound of the formula I according to any one of claims 1 to 4, wherein $R_2$ is phenyl, 4-chlorophenyl, 2,4-dimethylphenyl or $-C(CH_3)_2-C\equiv N$.

6. A compound of the formula I according to any one of claims 1 to 5, wherein $R_3$ is $2-Cl$, $4-Cl$ or $4-CF_3$.

7. A compound of the formula I according to any one of claims 1 to 6, wherein $R_1$ is methyl or ethyl.

8. A compound of the formula I according to any one of claims 1, 3, 4, 5 or 7, wherein n is zero.

9. A compound according to claim 8 of the formula

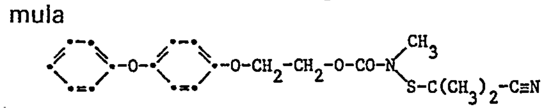

10. A compound according to claim 8 of the formula

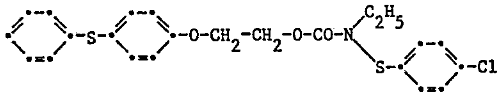

11. A compound according to claim 8 of the formula

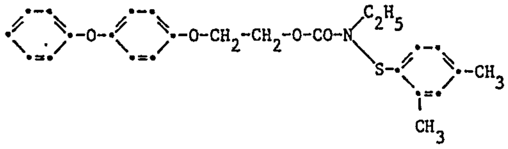

12. A compound according to claim 8 of the formula

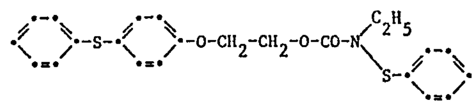

13. A compound according to claim 8 of the formula

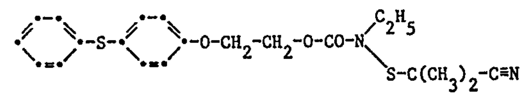

14. A compound according to claim 8 of the formula

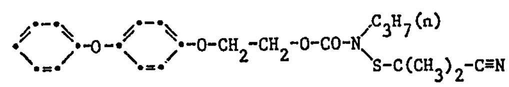

15. A process for the preparation of a compound of the formula I according to any one of claims 1 to 14, which process comprises reacting

a) a compound of the formula II

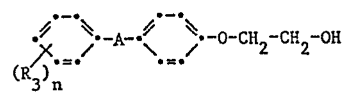 (II)

with a compound of the formula III

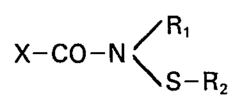 (III)

or

b) a compound of the formula IV

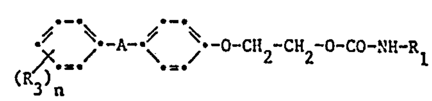 (IV)

with a compound of the formula V

$$X-S-R_2 \quad (V)$$

the symbols $R_1$, $R_2$, $R_3$, A and n in the formulae II to V being as defined in any one of claims 1 to 8, and X being halogen, preferably chlorine.

16. A pesticidal composition which contains as active ingredient a compound according to any one of claims 1 to 14, together with suitable carriers and/or other additives.

17. A method of controlling insects and members of the order *Acarina*, which method comprises applying thereto or to the locus thereof a pesticidally effective amount of a compound according to any one of claims 1 to 14.

18. A method according to claim 17 of controlling insects which damage plants.

19. A method according to claim 18, which method comprises the use of a compound according to any one of claims 1 to 14 as an ovicide.

20. A process for controlling insects, which process comprises the use of a compound of the formula I according to claim 1 as an active ingredient.

**Revendications**

1. Composé de formule I

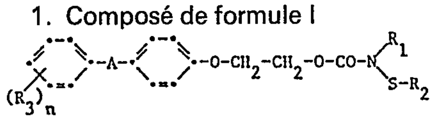 (I)

dans laquelle

$R_1$ représente un groupe alkyle en $C_1$-$C_4$,

$R_2$ représente un groupe phényle, un groupe phényle substitué par un ou deux atomes d'halogènes ou un ou deux groupes alkyle en $C_1$-$C_4$, ou le groupe $-C(CH_3)_2-C\equiv N$,

$R_3$ représente un halogène, un groupe alkyle en $C_1$-$C_4$ ou un groupe alkyle en $C_1$-$C_4$ portant jusqu'à trois substituants halogéno,

A représente l'oxygène ou le soufre, et

n est égal à 0, 1 ou 2.

2. Composé de formule I selon la revendication 1, caractérisé en ce que $R_3$ est substitué en position 2 et/ou 4 du noyau phényle.

3. Composé de formule I selon la revendication 1 ou 2, caractérisé en ce que $R_2$ représente un groupe phényle, un groupe phényle substitué par un ou deux atomes de fluor, de chlore ou de brome ou un ou deux groupes méthyle, ou le groupe $-C(CH_3)_2-C\equiv N$; et $R_3$ représente le fluor, le chlore, le brome, un groupe méthyle ou trifluorométhyle.

4. Composé de formule I selon la revendication 2, caractérisé en ce que $R_2$ représente un groupe phényle, un groupe phényle substitué par un ou deux atomes de chlore ou groupes méthyle ou le groupe $-C(CH_3)_2-C\equiv N$; et $R_3$ représente le chlore ou un groupe trifluorométhyle.

5. Composé de formule I selon l'une des revendications 1 à 4, caractérisé en ce que $R_2$ représente un groupe phényle, 4-chlorophényle, 2,4-diméthylphényle ou $-C(CH_3)_2-C\equiv N$.

6. Composé de formule I selon l'une des revendications 1 à 5, caractérisé en ce que $R_3$ représente un substituant $2-Cl$, $4-Cl$ ou $4-CF_3$.

7. Composé de formule I selon les revendications 1 à 6, caractérisé en ce que $R_1$ représente un groupe méthyle ou éthyle.

8. Composé de formule I selon l'une des revendications 1, 3, 4, 5 ou 7, caractérisé en ce que n est égal à 0.

9. Composé selon la revendication 8, de formule

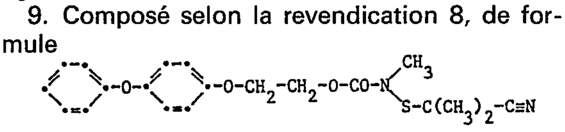

10. Composé selon la revendication 8, de formule

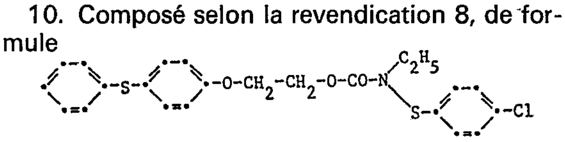

11. Composé selon la revendication 8, de formule

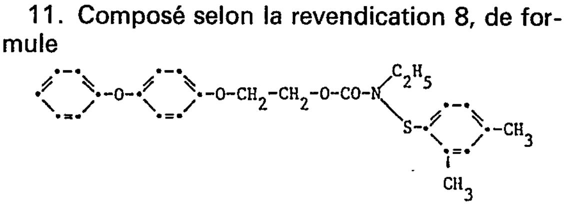

12. Composé selon la revendication 8, de formule

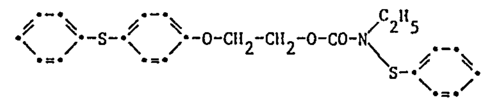

13. Composé selon la revendication 8, de formule

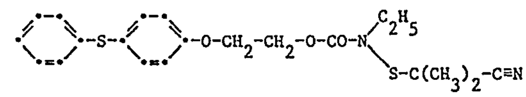

14. Composé selon la revendication 8, de formule

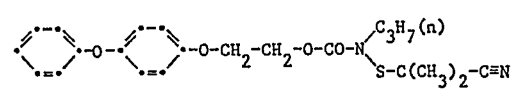

15. Procédé de préparation d'un composé de formule I selon les revendications 1 à 14, caractérisé en ce que:

a) on fait réagir un composé de formule II

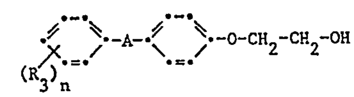 (II)

avec un composé de formule III

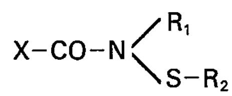 (III)

ou bien

b) on fait réagir un composé de formule IV

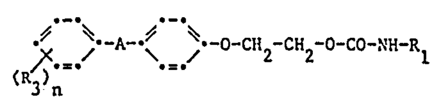 (IV)

avec un composé de formule V

$$X-S-R_2 \quad (V)$$

les symboles $R_1$, $R_2$, $R_3$ et A et n ayant dans les formules II à V les significations indiquées dans les revendications 1 à 8 et X représentant un halogène, de préférence le chlore.

16. Produit pesticide contenant en tant que composant actif un composé selon l'une des revendications 1 à 14, avec des véhicules et/ou d'autres additifs appropriés.

17. Utilisation d'un composé selon les revendications 1 à 14, dans la lutte contre les insectes et les représentants de l'ordre des acariens.

18. Utilisation selon la revendication 17, dans la lutte contre les insectes nuisibles pour les végétaux.

19. Utilisation selon la revendication 18, en tant qu'ovicide.

20. Procédé pour combattre les insectes, caractérisé en ce que l'on utilise en tant que substance active un composé de formule I selon la revendication 1.